# EUROPEAN PATENT SPECIFICATION

(11) **EP 2 077 219 B1**
(45) Date of publication and mention of the grant of the patent: **12.02.2014**
(21) Application number: 08254126.9
(22) Date of filing: 23.12.2008
(51) Int. Cl.: B62J 15/00

(54) **Front fender of motorcycle and motorcycle**
Vorderer Motorradstoßfänger und Motorrad
Garde-boue de motocyclette et motocyclette

(30) Priority: 28.12.2007 JP 2007341402
(43) Date of publication of application: 08.07.2009
(73) Proprietor: Yamaha Hatsudoki Kabushiki Kaisha, Shizuoka-ken Shizuoka 438-8501 (JP)
(72) Inventor: Okamoto, Hideko, Iwata-shi Shizuoka-ken 438-8501 (JP)
(74) Representative: Moreland, David

(56) References cited:
- DE-A1- 3 831 793
- GB-A- 846 420
- JP-A- 2000 344 171
- JP-A- 2004 338 467
- US-A- 4 458 909

## Description

### FIELD OF THE INVENTION

The present invention relates to a front fender for a motorcycle and in particular aspects relate to a front fender having a form for enhancing cooling efficiency of an engine, radiators or the like disposed behind the front fender.

### BACKGROUND OF THE INVENTION

An apparatus such as an engine and a radiator disposed behind a front wheel of a motor cycle is cooled with airflow generated while the vehicle is running. An upstanding wall part is formed on an upper surface of a front fender covering a front wheel of a vehicle disclosed in JP-A-2004-338467. The wall part changes the direction of airflow flowing downward along the upper surface of the front fender towards the vehicle engine to increase the cooling effect of the engine.

However, the wall part in the case of the front fender disclosed in JP-A-2004-338467 is located behind front suspension members provided to the sides of the front fender. Therefore, sufficient cooling effect may not be obtained. In other words, airflow reaches the front suspension members before reaching the wall part and the flow is disturbed. Accordingly, the airflow reaches the wall part as turbulent flow, and smooth airflow from the wall part to the engine is not achieved, and thus sufficient cooling effect may not be obtained.

JP2000-344171 is considered to represent the closest prior art and describes a fork brace that prevents mud from accumulating at a rear of the fork brace. A front fender comprises a raised portion in the upper surface of the fender in front of the forks. The raised portion has a downward step in the top surface of the fender from the raised front portion down to a rear section of the fender.

GB846420 describes a mudguard cover that comprises a cylindrical protuberance on the top side of the mudguard.

DE3831793 describes a fender for a motorcycle wherein it appears that the upper surface of the front fender is provided with a forward-back extending ridge in the centre and recessed air ducts in front of a wall portion. The ridge has a cut out portion for receiving the front suspension.

US4458909 describes a front fender and fork assembly for a two wheeled vehicle, wherein a pair of gently curved lateral projections are formed on either side of the fender intermediate the ends thereof and covering the front side of the legs in close proximity thereto. A rearwardly projecting blade is provided on a top surface of the front fender rearwardly of the forks so as to guide cooling air to the engine.

JP2004-338467 describes air introducing guide part provided on an upper surface of a front fender rearwardly of the front forks of a motorcycle.

An object of one aspect of the present invention is to provide a front fender capable of increasing the cooling effect of an apparatus such as an engine or a radiator disposed behind a front wheel, and a motorcycle provided with such a front fender.

### STATEMENTS OF INVENTION

The front fender according to one aspect of the present invention is the front fender for a motorcycle with an upper surface for extending rearward along the front wheel, the front fender disposed above the front wheel and between a pair of front suspension members supporting the front wheel, the fender comprising a transitional part for location forward of the suspension members, the transition part being formed on the upper surface of the fender to direct airflow flowing along the upper surface of the front fender away from the upper surface. The transitional part is formed on the upper surface of the front fender to extend from the center of the front fender to the left and right sides, and the center of the transitional part is located in front of end parts thereof such that the transitional part is formed in the shape of a V opened in the rear direction in a plan view of the front fender.

Further, in another aspect of the present invention, a motorcycle is provided with the front fender described above.

The motorcycle may comprises an air-cooled engine disposed to the rear of the front fender, or may comprises a radiator, in which coolant for cooling an engine flows, disposed to the rear of the front fender to cool the coolant by airflow.

The form of the fender is such that airflow reaches the transitional part before turbulent flow is generated in the airflow, and the airflow is smoothly directed away from the upper surface of the front fender. The airflow then passes between the suspension members. Therefore, air can be efficiently directed towards apparatus disposed behind the front wheel. Consequently, the cooling effect of the apparatus can be increased.

The transitional part may include a ridge part, and the upper surface of the front fender may extend downward from the ridge part before extending further rearward, along the surface of the front wheel.

The transitional part may have a sloping surface in front of the ridge part inclining upward toward the ridge part.

The upper surface of the front fender may extend rearward from a front end of the front fender and continue to the sloping surface.

The transitional part may be formed to extend from the center toward a pair of left and right front suspension members.

The ridge part may gradually incline upward from the center to the sides.

The ends of the ridge part may be adapted to be located above an upper end of an outer tube of a lower part of each front suspension member.

The front fender may be adapted to curve along the front wheel, and the center of the transitional part may be adapted to be located in front of a highest position on the front wheel.

The front fender may comprise a pair of left and right side surface parts hanging downward and for extending toward suspension members from a front side of the front fender.

A central ridge may extend rearward from a front end of the front fender and may be formed on the upper surface of the front fender.

The transitional part may be adapted to extend from the center of the front fender toward a pair suspension members and the central ridge may extend rearward from the front end of the front fender to the center of the transitional part.

### BRIEF DESCRIPTION OF THE DRAWINGS

FIG. 1 is a side view of a motorcycle provided with a front fender according to an embodiment of the present invention.
FIG. 2 is a side view of a front part of the motorcycle of FIG. 1.
FIG. 3 is a side view of the front fender of FIG. 1 mounted on a vehicle body.
FIG. 4 is a side view of the front fender of FIG. 1.
FIG. 5 is a perspective view of the front fender of FIG. 1.
FIG. 6 is a front view of the front fender of FIG. 1.
FIG. 7 is a cross-sectional view of the front fender taken along a line VII-VII shown in FIG. 6.
FIG. 8 is a cross-sectional view of the front fender taken along a line VIII-VIII shown in FIG. 6.
FIG. 9 is a cross-sectional view of the front fender taken along a line IX-IX shown in FIG. 3.
FIG. 10 is a perspective view of the front fender obtained when the front fender is seen from a direction indicated with X in FIG. 2.
FIG. 11 is a front view of a shroud provided to the motorcycle of FIG. 1.
FIG. 12 is a side view of the shroud and a guide wall provided to the motorcycle of FIG. 1. A state in which an outer frame and an inner frame of the shroud are partially broken is shown in the drawing.
FIG. 13 is a front view of the guide wall of FIG. 12.

### DETAILED DESCRIPTION OF THE DRAWINGS

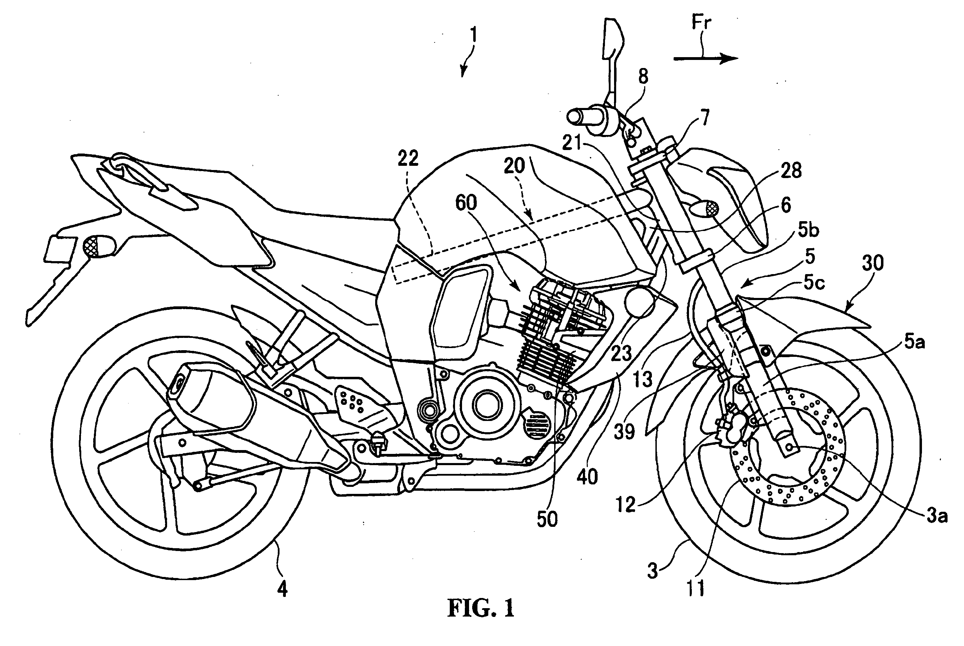

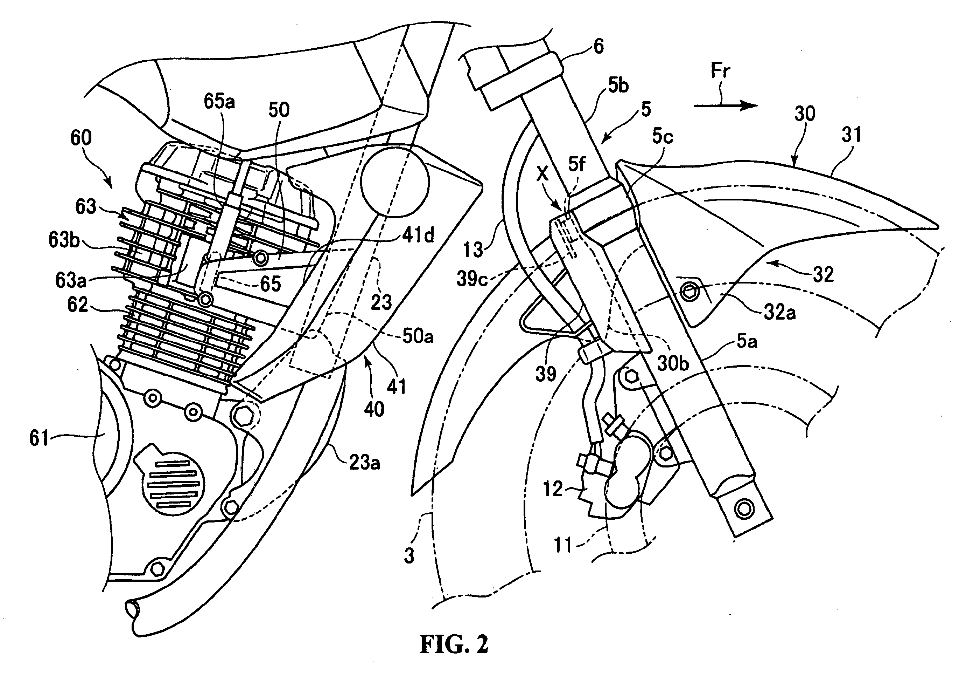

An embodiment of the present invention will be described hereinafter with reference to accompanying drawings. FIG. 1 is a side view of a motorcycle 1 provided with a front fender 30 as an example according to an embodiment of the present invention. FIG. 2 is a side view of a front part of the motorcycle 1.

As shown in FIG. 1, the motorcycle 1 is provided with a front wheel 3, a rear wheel 4, a pair of left and right front suspension forks or members 5 and 5, a body frame 20, a regulating plate 39, a shroud 40, a guide wall 50, and an engine 60 as well as a front mudguard or fender 30. Further, the body frame 20 includes a head pipe 21, a main tube 22, and a down tube 23.

The head pipe 21 is disposed at a front end of the body frame 20. A front end of the main tube 22 and an upper end of the down tube 23 are connected to the head pipe 21. The main tube 22 extends rearward from the front end thereof. The engine 60 is disposed below the main tube 22, and the main tube 22 supports the engine 60.

The engine 60 is an engine of an air-cooled type cooled by airflow flowing from the front of the vehicle while the vehicle is running. As shown in FIG. 2, the engine 60 is provided with a crankcase 61 located in a lower part of the engine 60 and housing a crankshaft (not shown), a cylinder block 62 disposed to extend obliquely upward from the crankcase 61 and having a cylinder (not shown) therein, and a cylinder head 63 mounted in an upper part of the cylinder block 62 and having a combustion chamber formed therein for combustion of fuel. The cylinder block 62 and the cylinder head 63 are located behind the front wheel 3 and the front fender 30 and below an under bracket 6 mounted on the front suspension members 5, 5. Further, a plug mount section 63a on a side surface 63b of the cylinder head 63 is formed in a position recessed inward from the side surface 63b. A spark plug 65 is mounted on the plug mount section 63a. A plug cap 65a is attached on the spark plug 65.

The engine 60 may be an engine of a water-cooled type. In this case, a radiator is disposed in front of the cylinder block 62 and the cylinder head 63. Moreover, coolant for cooling the engine 60 circulates in the radiator and the engine 60. Before flowing from the radiator, the coolant is cooled by airflow generated while the vehicle is running.

The down tube 23 extends obliquely downward in front of the engine 60 from the head pipe 21. A bracket 23a is provided on the lower end of the down tube 23, and the bracket 23a supports the crankcase 61.

The rear wheel 4 is disposed in the rear direction of the engine 60. Drive force output from the engine 60 is transmitted to the rear wheel 4 via a chain, a belt, and so forth now shown.

As shown in FIG. 1, the head pipe 21 supports a steering shaft (not shown) disposed inside the head pipe 21. The upper and lower ends of the steering shaft are fixed on an upper bracket 7 and the under bracket 6. An axle 3a of the front wheel 3 is supported by the lower ends of the front suspension members 5, 5. Upper parts of the front suspension members 5, 5 are held by both of the upper bracket 7 and the under bracket 6. A handlebar 8 is mounted on the upper bracket 7. Moreover, the handlebar 8 rotates leftward and rightward with the front suspensions 5, 5 and the front wheel 3 around the steering shaft.

The front suspension 5 is, for example, a suspension of a telescopic type and has an outer tube 5a and an inner tube 5b inserted from an upper direction into the inside of the outer tube 5a and is axially movable in relation to the outer tube 5a. Another part of the outer tube 5a and a large diameter part 5c whose diameter is larger than that of the inner tube 5b are provided on the upper end of the outer tube 5a.

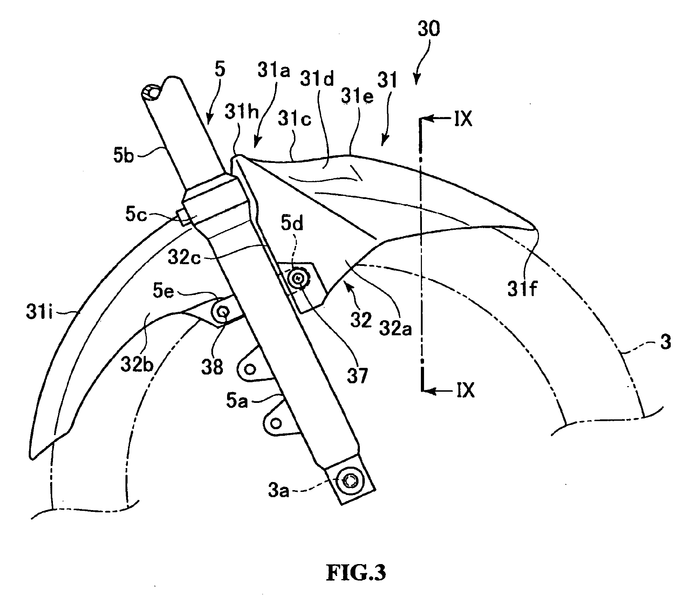

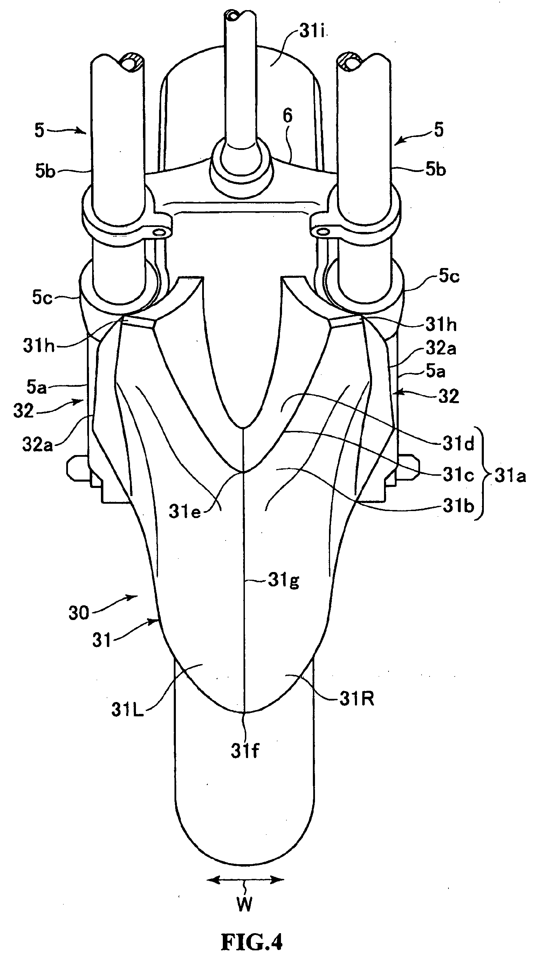

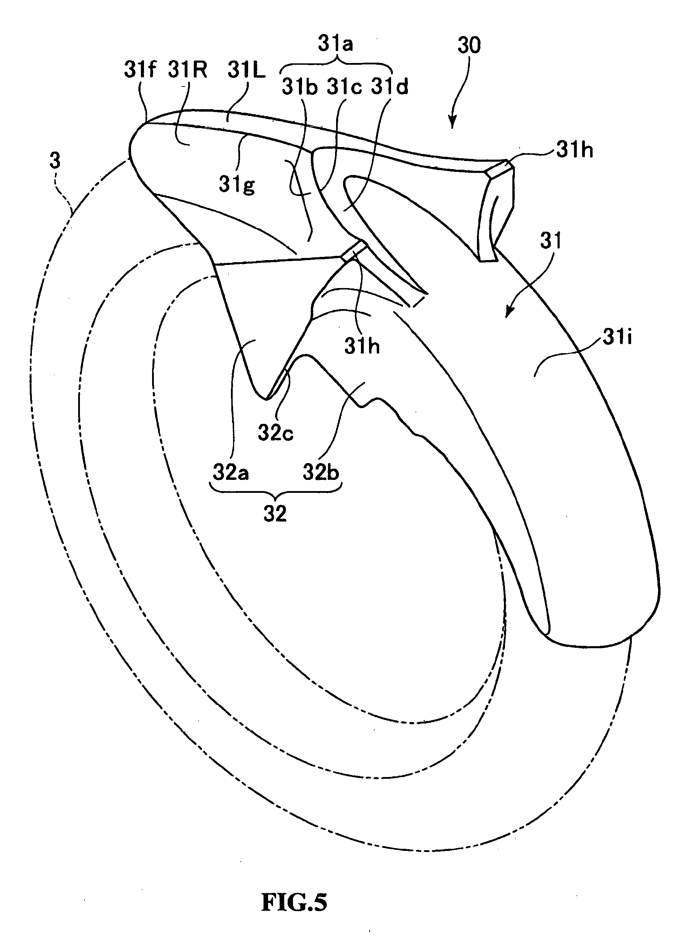

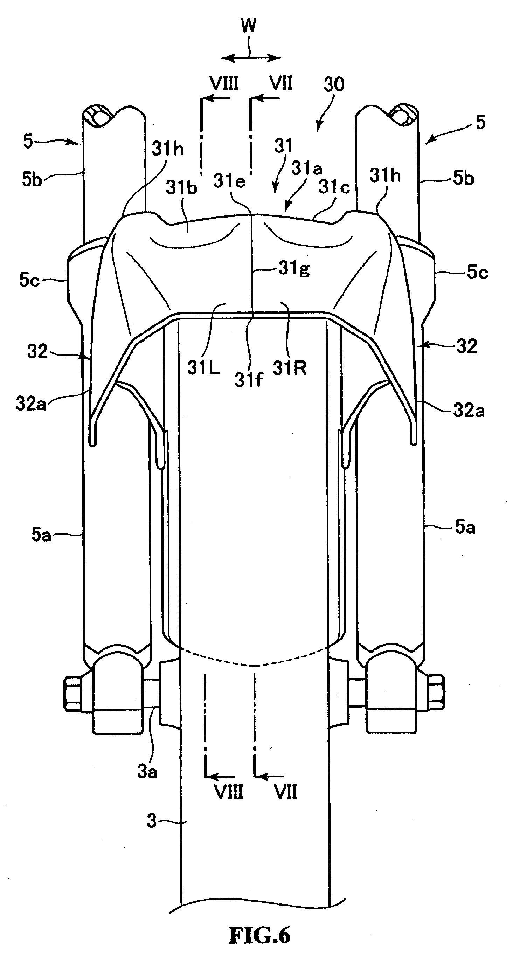

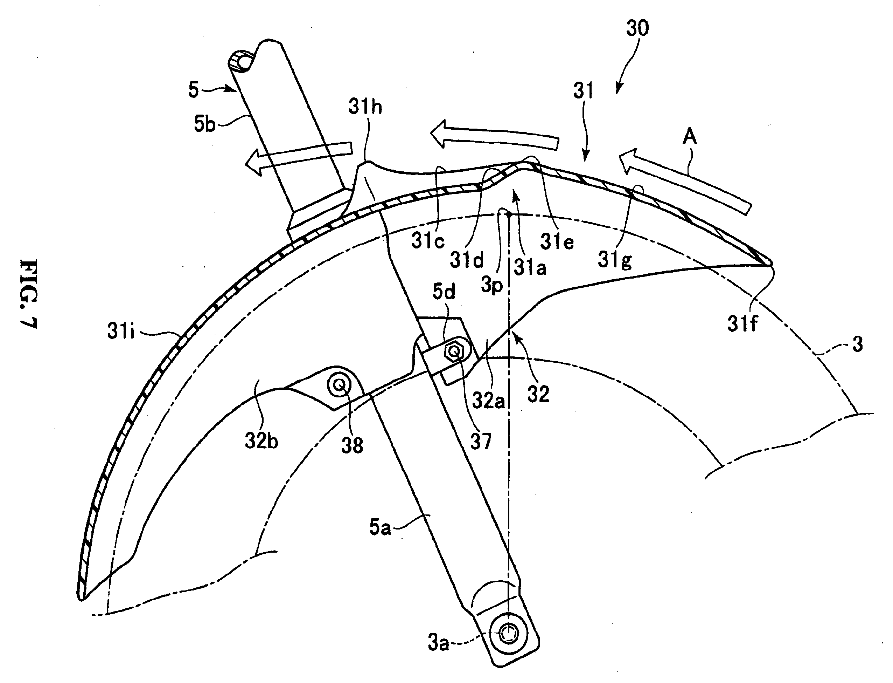

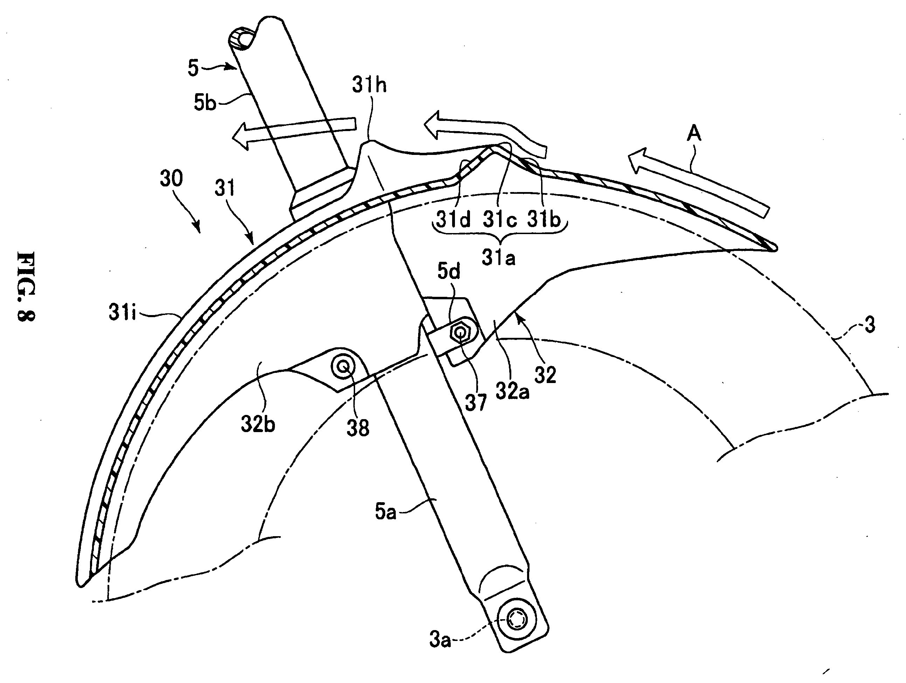

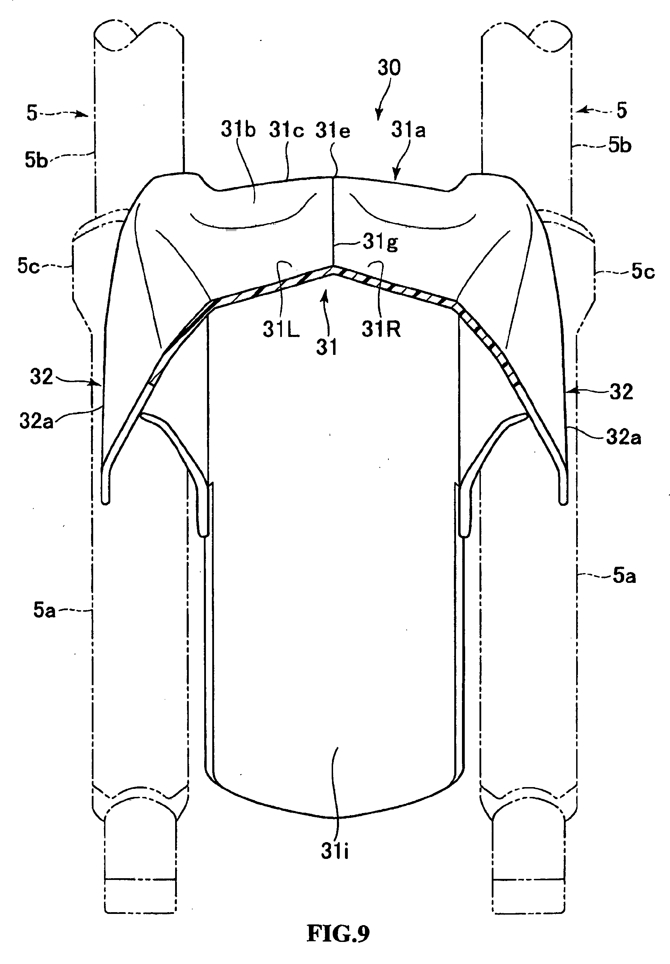

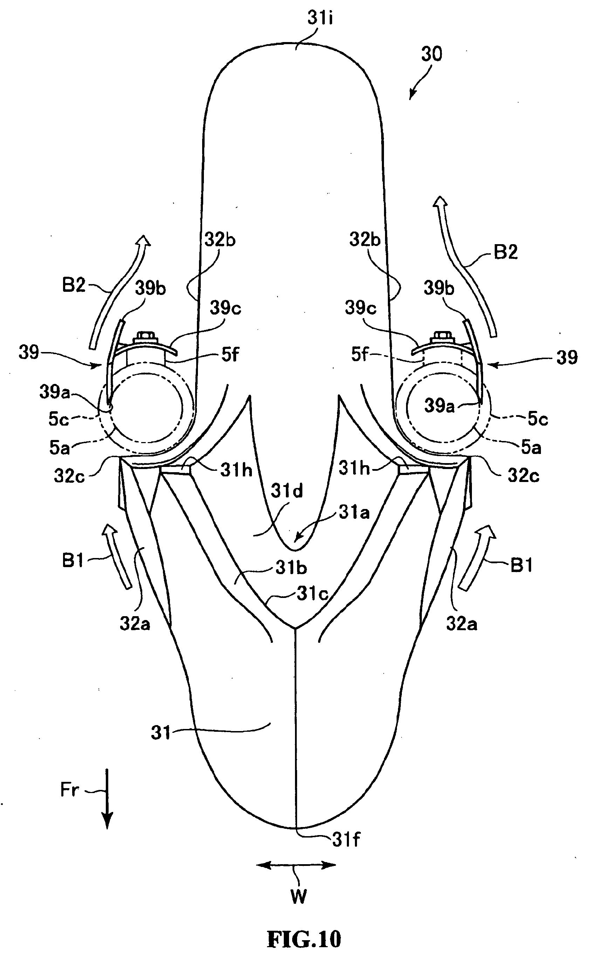

The front fender 30 will be described in detail. FIG. 3 is a side view of the front fender 30. FIG. 4 is a plan view of the front fender 30. FIG. 5 is a perspective view of the front fender 30. FIG. 6 is a front view of the front fender 30. FIG. 7 is a cross-sectional view of the front fender 30 taken along a line VII-VII shown in FIG. 6. FIG. 8 is a cross-sectional view of the front fender 30 taken along a line VIII-VIII shown in FIG. 6. FIG. 9 is a cross-sectional view of the front fender 30 taken along a line IX-IX shown in FIG. 3. FIG. 10 is a perspective view of the front fender 30 obtained when the front fender 30 is seen from a direction indicated with X in FIG. 2. Airflow passing above the front fender 30 is indicated by arrows in FIG. 7, FIG. 8, or FIG. 10.

As shown in FIG. 3 or FIG. 4, the front fender 30 is disposed above the front wheel 3 and between the left and right front suspension members 5, 5. The front fender 30 follows the external shape of the front wheel 3 and covers the upper surface of the front wheel 3.

As shown in FIG. 3, the front fender 30 is supported by the front suspension members 5, 5. Specifically, the outer circumference of the outer tube 5a is provided with a bracket 5d projecting forward inside the front fender 30 and a bracket 5e projecting rearward outside the front fender 30. The front fender 30 is fixed on the brackets 5d, 5e with bolts 37, 38.

The front fender 30 has an upper surface part 31 located radially of the front wheel 3 and a pair of left and right side surface parts 32, 32 extending downward from the upper surface part 31 and located on sides of the front wheel 3 (see FIG. 5). The upper surface part 31 extends rearward, following the external shape of the front wheel 3 (see FIG. 7 or FIG. 8). Specifically, the upper surface part 31 extends generally rearward following the external shape of the front wheel 3 in front of the front suspension 5 and extends obliquely downward following the external shape of the front wheel 3 behind the front suspension 5.

A transitional part 31 a is formed on the upper surface part 31 in front of the suspension members 5, 5 (see FIG. 5 or FIG. 8). An extending direction of the upper surface part 31 changes at the transitional part 31 a to direct airflow flowing along the upper surface part 31 away from the upper surface part 31.

Specifically, as shown in FIG. 5 or FIG. 8, the transitional part 31 a includes a front side sloping surface 31b, on an edge or ridge or bending part 31c adjacent to the front side sloping surface 31 b, and a rear side sloping surface 31 d adjacent to the ridge part 31 c. Moreover, the upper surface part 31 is directed downward (toward the outer circumference of the front wheel 3) at the ridge part 31 c to direct airflow flowing along the upper surface part 31 away from the upper surface part 31. This means that airflow flows along the upper surface part 31 rearward from a front end 31f thereof while the vehicle is running (see FIG. 7). The upper surface part 31 changes inclination after the ridge part 31c to extend in a direction away from the travelling direction of airflow (the direction indicated by A in FIG. 7 or FIG. 8). Consequently, airflow does not follow the change in direction of the upper surface part 31 but separates at the ridge part 31 c from the upper surface part 31. Moreover, the airflow passes between the front suspension members 5 and 5 and the shroud 40 and reaches the engine 60. Further, the ridge part 31c is located in front of the front suspension members 5, 5, and smooth airflow reaches the ridge part 31c before reaching the front suspension member 5, 5. Moreover, since the airflow separates at the ridge part 31 c from the upper surface part 31, smooth airflow passing between the front suspension members 5, 5 and the shroud 40 is formed.

As shown in FIG. 4 or FIG. 8, the front side sloping surface 31 b is located in front of the ridge part 31 c and inclines upward toward the ridge part 31 c. The upper surface part 31 extends rearward from the front end 31f thereof and continues to the front side sloping surface 31 b. Moreover, the upper surface part 31 inclines obliquely upward at the front side sloping surface 31 b and reaches the ridge part 31 c. Further, since the upper surface part 31 extends rearward along the external shape of the front wheel 3, the upper surface part 31 slightly inclines upward not only between the front side sloping surface 31 b and the ridge part 31c but also between the front end 31f and the ridge part 31c (see FIG. 7 or FIG. 8).

Moreover, after the upper surface part 31 changes in orientation at the ridge part 31c and slightly extends obliquely downward at the rear side sloping surface 31d, the upper surface part 31 further extends obliquely rearward at a rear side upper surface part 31 i adjacent to the rear side sloping surface 31d following the external surface of the front wheel 3. As shown in FIG. 7, there is no front side sloping surface 31 b at the center in the width direction of the upper surface part 31 (the direction indicated by W in FIG. 6), the upper surface part 31 gradually sloping from the front end 31f to the ridge part 31c,substantially following the external shape of the front wheel 3.

As shown in FIG. 9, the front side of the upper surface part 31 is formed such that the cross section thereof forms the shape of the letter V opening in the lower direction, and the upper surface part 31 includes a right upper surface part 31 R located at the right side on the upper surface part 31 and a left upper surface part 31 L located at the left side on the upper surface part 31. The right upper surface part 31 R and the left upper surface part 31 L extend rearward respectively and continue to the front side sloping surface 31 b.

Further, as shown in FIG. 6, a top part 31g is formed on the upper surface part 31. The top part 31g follows the center of the upper surface part 31 and extends rearward from the front end 31f to reach a front end 31e of the transitional part 31a. As shown in FIG. 9, the right upper surface part 31 R and the left upper surface part 31 L extend from the top part 31g to the left and right sides. The angle formed by the right upper surface part 31 R and the left upper surface part 31L gradually increases toward the front end 31f, where the front end edges of the right upper surface part 31 R and the left upper surface part 31 L are aligned (see FIG. 6).

As shown in FIG. 4, the transitional part 31 a on the front fender 30 is formed to extend from the center of the upper surface part 31 to the left and right sides. Further, the transitional part 31 a is formed to show the shape of the letter V opened in the rear direction in a plan view of the front fender 30, and the center of the transitional part 31 a is located in front of the ends of the transitional part 31 a.

Specifically, the ridge part 31 c extends obliquely rearward with the front side sloping surface 31 b from the central front end 31e toward the front suspension members 5, 5. Moreover, end parts 31 h, 31 h of the ridge part 31 c and the front side sloping surface 31 b at a part in front of the end parts 31 h, 31 h are located in front of the front suspension members 5, 5 (see FIG. 6). Further, the front side sloping surface 31 b is formed such that the ridge part 31 c inclines upward from the center thereof (the front end 31 e) toward the left and right sides (see FIG. 5). Moreover, the height of the ridge part 31 c at the end parts 31 h, 31 h is higher than the large diameter part 5c of the suspension members outer tube 5a (see FIG. 3). Further, as shown in FIG. 7, the front end 31e of the ridge part 31c is located in a position in the perpendicular direction of an axle 3a and further forward than a top part 3p located in the highest position on the front wheel 3.

As shown in FIG. 5, each of the side surface parts 32 and 32 include a front side surface part 32a and a rear side surface part 32b. The front side surface part 32a extends downward from the right upper surface part 31 R and the left upper surface part 31 L located in front of the front fender 30. Further, as shown in FIG. 10, the front side surface part 32a extends obliquely rearward toward a position on the outer circumference of the outer tube 5a of the suspension members 5 on the outer side in the width direction of the vehicle. This means that the front side surface part 32a extends toward the outer tubes 5a and 5a and gradually spreads toward the rear direction in the width direction of the front fender 30. Because of this, when the vehicle is running, smooth airflow B1 toward the rear direction along a front side surface part 30a reaching the side of the outer tube 5a is formed (see FIG. 10). The front side surface part 32a is located at a side of the front wheel 3 and in front of the front suspension 5, and a rear end 32c thereof extends in front of the outer tube 5a in the vertical direction (see FIG. 3).

The rear side surface part 32b bends from the rear end 32c to the center side (the inner side) in the width direction of the vehicle and extends rearward to pass between the outer tube 5a and the front wheel 3 (see FIG. 5 or FIG. 10).

The regulating plate 39 will be described. As shown in FIG. 2, the regulating plate 39 is a member in the shape of a vertically extending long board or sheet and, provided behind the outer tube 5a. Further, as shown in FIG. 10, the regulating plate 39 is disposed to incline from the outer circumference of the outer tube 5a towards the center of the vehicle, and a rear end edge 39b thereof is located closer to the center than a front end edge 39a. Because of this, smooth airflow B2 from a side of the outer tube 5a toward an obliquely rear direction along the regulating plate 39 is formed.

As shown in FIG. 10, the regulating plate 39 has a mount section 39c in the shape of a board or sheet on an inner side thereof. The mount section 39c is fixed, for example, on a boss 5f provided to the large diameter part 5c of the outer tube 5a. Further, as shown in FIG. 2, a brake hose 13 is disposed in the rear direction of the regulating plate 39. The brake hose 13 is connected to a caliper 12 for pinching a brake disk 11 rotating with the front wheel 3.

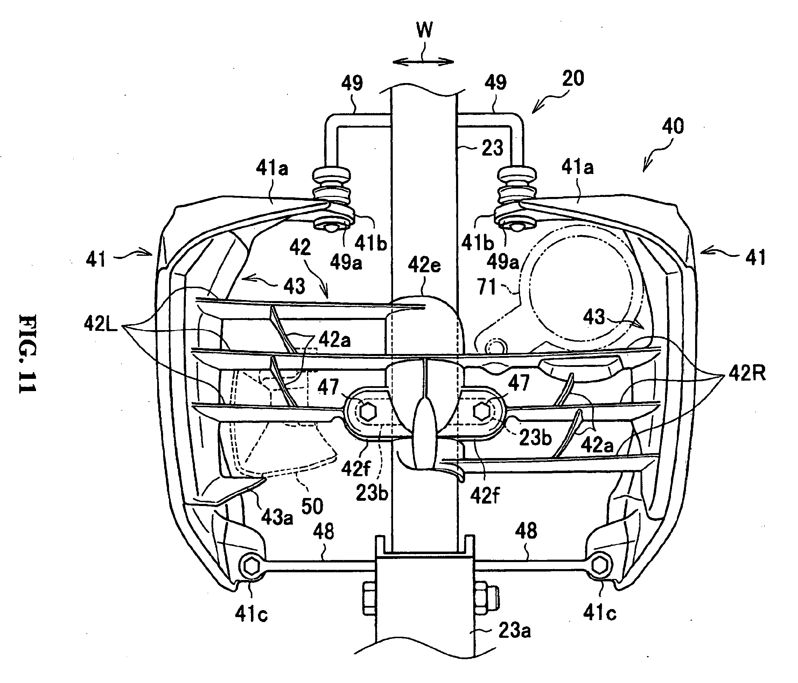

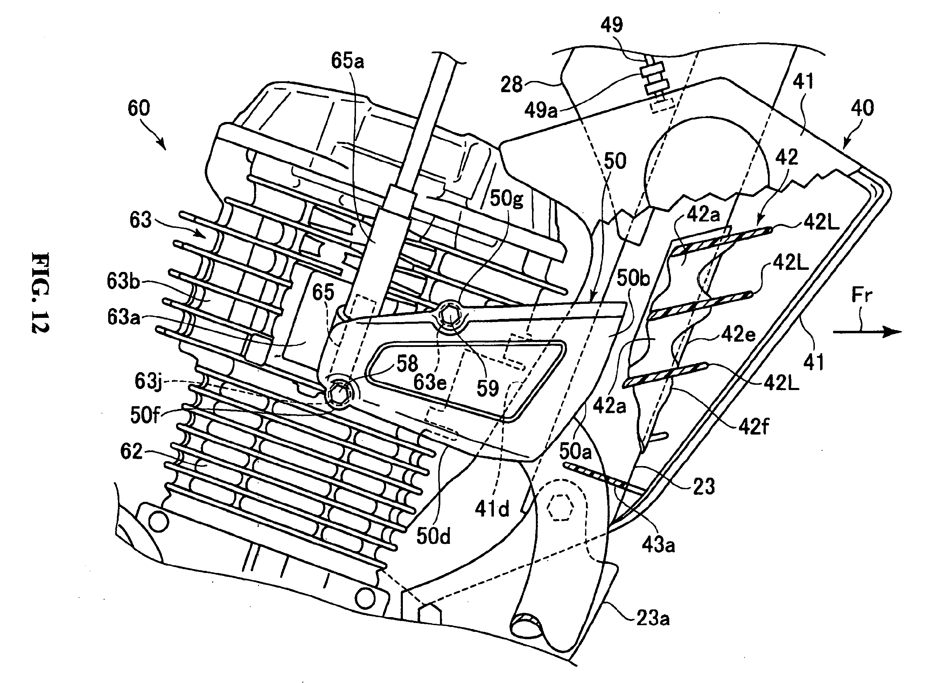

The shroud 40 will be described. As shown in FIG. 2, the shroud 40 is disposed in front of the engine 60 and to the rear of the front fender 30 and directs airflow passing the upper side and the lateral side of the front fender 30 to the engine 60. FIG. 11 is a front view of the shroud 40, and FIG. 12 is a side view of the shroud 40 and the guide wall 50. In FIG. 12, an outer frame 41 and an inner frame 43 of the shroud 40 are partially broken away, and a front side guide 42 disposed therein is illustrated.

As shown in FIG. 11, the shroud 40 has the front side guide 42 located in front of the cylinder head 63 and the cylinder block 62, outer frames 41, 41 in the shape of a board or sheet located on the left and right sides of the front side guide 42, and inner frames 43, 43 located inside the outer frames 41, 41 (on the center side in the width direction of the vehicle) and at the left and right sides of the front side guide 42.

The outer frame 41 is located in a position away from the center of the vehicle toward the vehicle side (see FIG. 11). Further, the outer frame 41 is located generally at the same height as the regulating plate 39 and the front side surface part 32a of the front fender 30 (see FIG. 2) and directs the airflow B1, B2 passing the sides of the front side surface part 32a and the regulating plate 39 to the cylinder head 63 and the cylinder block 62.

As shown in FIG. 11, the outer frames 41, 41 are supported at the left and right sides of the down tube 23 by the body frame 20. Specifically, stays 49, 49 extending sideways are provided to the body frame 20, and dampers 49a, 49a in the shape of a cylinder are provided to the ends of the stays 49, 49. The outer frame 41 has an upper surface part 41a above the front side guide 42 extending to the side of the down tube 23, and a mount section 41 b holding the damper 49a is formed on the end of the upper surface part 41 a. A gusset 28 is provided between the upper end of the down tube 23 and the main tube 22 (see FIG. 1), and the stay 49 is mounted on the gusset 28. Further, stays 48, 48 extending sideways are mounted on the bracket 23a provided to the lower end of the down tube 23. A mount section 41 c projecting to the side of the down tube 23 is formed on the lower edge of the outer frame 41, and the end of the stay 48 is fixed on the mount section 41 c.

The front side guide 42 has a plurality of horizontal boards 42L and 42R generally horizontally disposed between the down tube 23 and the outer frame 41. A plurality of the horizontal boards 42L (three horizontal boards 42L here) are vertically arranged at the left side of the down tube 23, and a plurality of the horizontal boards 42R (three horizontal boards 42R here) are vertically arranged at the right side of the down tube 23. A plurality of the horizontal boards 42L and 42R direct the airflow A having passed over the upper surface part 31 to the engine 60. Props 42a supporting the horizontal boards 42L, 42R are provided between the horizontal boards 42L and between the horizontal boards 42R.

The front side guide 42 has a support part 42e on the center thereof vertically extending along the outer circumference of the down tube 23 and bending according to the shape of the outer circumference, and a mount section 42f projecting sideways is formed on the support part 42e. Brackets 23b, 23b projecting sideways are provided to the down tube 23, and the mount section 42f is fixed on the bracket 23b with a bolt 47. The horizontal boards 42L and 42R extend sideways from the support part 42e.

As described above, the inner frames 43 and 43 are located inside the outer frames 41, 41 (on the center side in the width direction of the vehicle) and at the left and right sides of the front side guide 42. A guide board 43a in the shape of a board projecting inward from the lower end edge of the inner frame 43 is formed on the inner frame 43 at the left side. The inner frames 43, 43 are formed integrally with the front side guide 42.

Further, an alarm horn 71 for sounding a warning sound in response to an operation by an operator is disposed on a side of the down tube 23. The alarm horn 71 is located in rear of a space between the horizontal board 42R located at the highest place among a plurality of the horizontal boards 42R provided at the right side of the down tube 23 and the upper surface part 41 a of the outer frame 41 at the right side and exposed to the front direction of the vehicle.

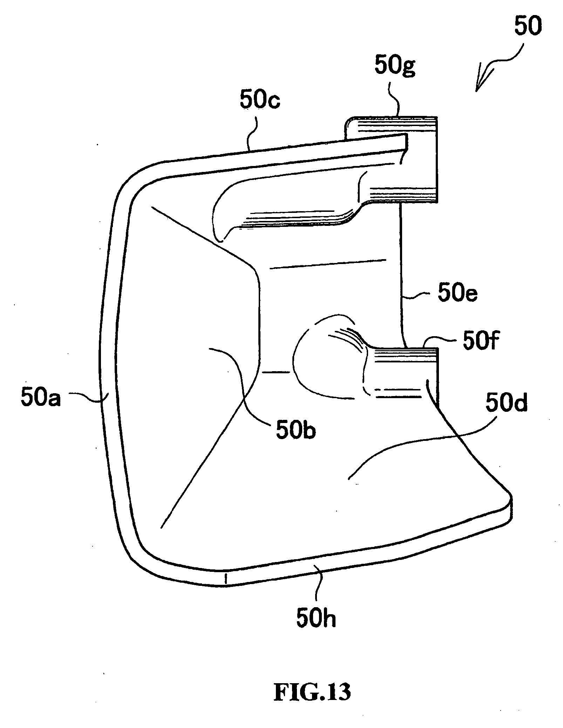

The guide wall 50 will be described in detail. FIG. 13 is a front view of the guide wall 50. The guide wall 50 is provided at a side of the cylinder head 63 to direct airflow to the plug mount section 63a of the cylinder head 63 (see FIG. 2). Specifically, the guide wall 50 has a side surface part 50b, an upper surface part 50c, and a lower surface part 50d (see FIG. 13). The side surface part 50b is provided to extend forward along the cylinder head side surface 63b after projecting sideways from the side surface 63b (see FIG. 12 and FIG. 13). The upper surface part 50c and the lower surface part 50d extend to the side of the side surface 63b from the upper edge and the lower edge of the side surface part 50b (see FIG. 13). Because of this, an airflow path surrounded by the side surface 63b, the side surface part 50b, the upper surface part 50c, and the lower surface part 50d is constituted. A gap is provided between a rear end edge 50e of the guide wall 50 and the side surface 63b so that air following the airflow path flows in the rear direction of the vehicle after being directed by the plug mount section 63a (see FIG. 13).

The guide wall 50 is formed such that a cross section of the airflow path constituted with the side surface 63b of the engine 60 gradually becomes larger toward the front direction. Specifically, the upper surface part 50c inclines in the upper direction in relation to the lower surface part 50d so that the distance between the upper surface part 50c and the lower surface part 50d gradually becomes larger toward the front direction (see FIG. 13). Further, the side surface part 50b inclines in relation to the side surface 63b of the engine 60 such that the front side thereof is located more outward (toward the outside in the width direction of the vehicle) than the rear side thereof.

As shown in FIG. 11 or FIG. 12, the front side guide 42 of the shroud 40 is located in front of the guide wall 50. This means that the horizontal boards 42L at the left side are located in front of the guide wall 50 and direct airflow to the airflow path constituted with the guide wall 50 and the side surface 63b.

Further, a front end edge 50a of the guide wall 50 is located closer to the center of the vehicle than the outer frame 41 of the shroud 40 is, located further forward than a rear end edge 41 d of the outer frame 41, and covered with the outer frame 41 from a side (see FIG. 2). Further, as shown in FIG. 12, the guide board 43a formed on the inner frame 43 is located in front of the lower surface part 50d and provided generally in parallel with the lower surface part 50d.

The guide wall 50 described above is mounted on the engine 60. Specifically, as shown in FIG. 12, bosses 63j, 63e projecting sideways are formed in two positions on the side surface 63b of the cylinder head 63 vertically away from each other. Mount sections 50f, 50g are formed at the end edge of the guide wall 50 on the center side in the width direction of the vehicle, and the mount sections 50f and 50g are fixed on the bosses 63j, 63e with bolts 58, 59.

In the case of the front fender 30 described above, the transitional part 31 a on the upper surface part 31 whose extending direction changes is formed on the upper surface part 31 to the front of a pair of suspension members 5, 5 so that airflow flowing along the upper surface part 31 is directed away from the upper surface part 31. According to the front fender 30, before turbulent flow is generated in the airflow, the airflow reaches the transitional part 31 a and smoothly flows away from the upper surface part 31. Moreover, the airflow passes between the left and right front suspension members 5, 5 to flow rearward. Accordingly, air can efficiently flow to the apparatus disposed rearwards of the front wheel 3. Consequently, the cooling effect of the apparatus can be increased.

Further, in the case of the front fender 30, the transitional part 31 a includes the ridge part 31 c, and the upper surface part 31 of the front fender 30 extends downward from the ridge part 31 c before extending further rearward along the external shape of the front wheel 3. Because of this, airflow before becoming turbulent flow can be directed away from the upper surface part 31 at the ridge part 31 c.

Further, the transitional part 31 a has the front side sloping surface 31 b inclining gradually upward toward the ridge part 31c in front of the ridge part 31c. Because of this, airflow reaches the front side sloping surface 31 b, and the flow direction thereof is directed obliquely upward. Consequently, the airflow easily separates from the upper surface part 31 of the front fender 30.

Further, the upper surface part 31 extends rearward from the front end 31f thereof and continues to the front side sloping surface 31 b. Because of this, airflow smoothly flows along the upper surface part 31 of the front fender 30 and reaches the front side sloping surface 31b.

Further, the ridge part 31c is formed on the upper surface part 31 to extend from the center of the upper surface part 31 to the left and right sides. Moreover, the center of the ridge part 31 c (the front end 31 e in the description above) is located in front of the end parts 31h and 31 h thereof. Because the front portion of the upper surface part 31 follows the external shape of the front wheel 3, the front portion of the upper surface part 31 slightly inclines. Consequently, smooth airflow is formed on the front portion of the upper surface part 31 more easily than on the rear side. Moreover, the center of the ridge part 31c is located further forward than the end parts 31 h, 31 h. Consequently, smooth airflow reaches the center of the ridge part 31 c, and the airflow then efficiently separates from the upper surface part 31 of the front fender 30.

Further, the ridge part 31 c is formed to extend outwards from the center of the upper surface part 31 toward the front suspension members 5, 5. Because of this, before airflow reaches the front suspension members 5, 5, the airflow can be directed away from the upper surface part 31.

Further, the ridge part 31 c inclines gradually upward from the center of the upper surface part 31 toward the left and right sides. Because of this, airflow flowing at the end parts in the width direction of the upper surface part 31, in other words, at the sides of the end parts 31 h, 31 h can be efficiently directed away from the upper surface part 31.

Further, the ridge part 31 c inclines gradually upward from the center of the upper surface part 31 toward the left and right sides, and the end parts 31 h, 31 h thereof are higher than the upper ends of the outer tubes 5a, 5a (the large diameter parts 5c, 5c in the description above) provided in the lower part of the front suspension members 5, 5. As illustrated with the motorcycle 1, the upper end of the outer tube is normally thicker than other part of the front suspension. Therefore, turbulent flow is easily generated when airflow reaches the upper ends. In the case of the front fender 30, the end parts 31 h, 31 h of the bending part 31c are higher than the upper ends of the outer tubes 5a. Consequently, generation of the turbulent flow can be suppressed.

Further, the front fender 30 follows the external shape of the front wheel 3. Moreover, the center (the front end 31 e) of the ridge part 31 c is located further forward than the highest point 3p of the front wheel 3. Because of this, smooth airflow reaches the center of the ridge part 31 c, and the airflow can be efficiently directed away from the upper surface of the front fender.

Further, the front fender 30 further includes a pair of left and right front side surface parts 32a, 32a hanging downward and extending rearward toward the left and right front suspension members 5, 5. Because of this, it is possible to suppress the turbulent flow that is normally generated when airflow reaches the lower part of the front suspension members 5, 5.

Further, the top part 31g extending along the center of the upper surface part 31 and extending rearward from the front end 31f thereof is formed on the upper surface part 31. Because of this, air resistance generated by airflow reaching the front fender 30 can be reduced.

Further, the edge part 31c is formed to extend from the center thereof toward the left and right front suspension members 5, 5, and the top part 31g extends rearward from the front end 31f of the upper surface part 31 and reaches the center (the front end 31e in the description above) of the ridge part 31c. Because of this, while the vehicle is running, air resistance can be reduced, and airflow flowing from the front end 31f of the upper surface part 31 to the transitional part 31 a can be made smooth.

Further, the motorcycle 1 is provided with the engine 60 of an air-cooled type disposed behind the front fender 30. Because of this, the engine 60 of an air-cooled type can be efficiently cooled.

Further, in the case of the motorcycle 1, coolant cooling the engine may flow therein as described above, and the radiator cooling the coolant by airflow may be disposed to the rear of the front fender. In this case, the engine of a water-cooled type can be efficiently cooled.

The present invention is not limited to the front fender 30 described above, but various modifications can be made. For example, the upper surface part 31 bulges at the transitional part 31 a by the fact that the front side sloping surface 31 b is provided in front of the ridge part 31 c in the description above. However, the front side sloping surface 31 b described above may not be formed on the upper surface part 31. This means that a step may be formed on the upper surface part 31 by the ridge part 31 c.

Further, the transitional part 31 a is formed over one end to the other end in the width direction of the upper surface part 31 in the description above. However, the transitional part 31 a may be formed only in a vicinity of the center in the width direction of the upper surface part 31.

### Description of Reference Numerals and Symbols

1: motorcycle
3: front wheel
4: rear wheel
5: front suspension
5a: outer tube
6: under bracket
7: upper bracket
8: handlebar
20: body frame
21: head pipe
22: main tube
23: down tube
30: front fender
31: upper surface part
31a: transitional part
31b: front side sloping surface (sloping surface)
31c: edge part
31e: front end of ridge part
31h: end part of edge part
40: shroud
41: outer frame
42: front side guide
43: inner frame
50: guide wall
60: engine
61: crankcase
62: cylinder block
63: cylinder head
64: cover
65: spark plug

## Claims

1. A front fender (30) for a motorcycle (1), the fender (30) having an upper surface (31) for extending rearward along and above a front wheel (3) and between a pair of suspension members (5) supporting the front wheel (3), the fender (30) comprising a transitional part (31a), for location forward of the suspension members (5), the transitional part (31a) being formed on an upper surface (31) of the fender (30) to direct airflow flowing along the upper surface (31) of the front fender (30) away from the upper surface (31); wherein
the transitional part (31a) is formed on the upper surface (31) of the front fender (30) to extend from the center of the front fender (30) to the left and right sides, and the center (31e) of the transitional part (31a) is located in front of end parts (31 h) thereof such that the transitional part is formed in the shape of a V opened In the rear direction in a plan view of the front fender.

2. The front fender (30) according to claim 1,
wherein the transitional part (31a) includes a ridge part (31c), and
the upper surface (31) of the front fender (30) extends downward from the ridge part (31c) before extending further rearward, along the surface of the front wheel (3).

3. The front fender (30) according to claim 1 or 2, wherein the transtional part (31a) has a sloping surface (31b) In front of the ridge part (31c) inclining upward toward the ridge part (31c).

4. The front fender (30) according to claim 3, wherein the upper surface (31) of the front fender (30) extends rearward from a front end (31f) of the front fender (30) and continues to the sloping surface (31b).

5. The front fender (30) according to any preceding claim, wherein the transitional part (31a) is formed to extend from the center toward a pair of left and right front suspension members (5).

6. The front fender (30) according to any preceding claim, wherein the ridge part (31c) gradually inclines upward from the center to the sides.

7. The front fender (30) according to claim 6; wherein
ends (31h) of the ridge part are adapted to be located above an upper end (5c) of an outer tube (5a) of a lower part of each front suspension member (5).

8. The front fender (30) according to any preceding claim,
wherein the front fender (30) is adapted to curve along the front wheel (3), and
the center (31c) of the transitional part (31a) is adapted to be located in front of a highest position (3p) on the front wheel (3).

9. The front fender (30) according to any preceding claim, further comprising: a pair of left and right side surface parts (32) hanging downward and for extending toward suspension members (5) from a front side of the front fender.

10. The front fender (30) according to any preceding claim, wherein a central ridge (31g) extends rearward from a front and (31f) of the front fender (30) and is formed on the upper surface (31) of the front fender (30).

11. The front fender (30) according to claim 10,
wherein the transitional part (31a) is adapted to extend from the center of the front fender (30) toward a pair suspension members (5) and
the central ridge (31g) extends rearward from the front and (31f) of the front fender (30) to the center (31e) of the transitional part (31a).

12. A motorcycle (1) comprising the front fender (30) according to any preceding claim.

13. The motorcycle (1) according to claim 12, comprising: an air-cooled engine (60) disposed to the rear of the front fender.

14. The motorcycle according to claim 12, further comprising: a radiator, in which coolant for cooling an engine flows, disposed to the rear of the front fender (30) to cool the coolant by airflow.

## Patentansprüche

1. Vorderes Schutzblech (30) für ein Motorrad (1), wobei das Schutzblech (30) eine obere Fläche (31) hat, die sich nach hinten entlang und oberhalb eines Vorderrades (3) und zwischen einem Paar von Aufhängungselementen (5), die das Vorderrad (3) stützen, erstreckt, wobei das Schutzblech (30) einen Übergangsteil (31a) zur Anordnung vor den Aufhängungselementen (5) umfasst, wobei der Übergangsteil (31a) an einer oberen Fläche (31) des Schutzblechs (30) geformt ist, um einen Luftstrom, der entlang der oberen Fläche (31) des vorderen Schutzblechs (30) strömt, von der oberen Fläche (31) weg zu leiten, wobei
der Übergangsteil (31a) an der oberen Fläche (31) des vorderen Schutzblechs (30) so geformt ist, dass er sich von der Mitte des vorderen Schutzblechs (30) zu der linken und der rechten Seite erstreckt und die Mitte (31e) des Übergangsteils (31a) vor Endteilen (31h) desselben angeordnet ist derart, dass der Übergangsteil in der Form eines V geformt ist, das in einer Draufsicht des vorderen Schutzblechs in der Richtung nach hinten geöffnet ist.

2. Vorderes Schutzblech (30) nach Anspruch 1,
wobei der Übergangsteil (31a) einen Kammteil (31c) einschließt, und
sich die obere Fläche (31) des vorderen Schutzblechs (30) von dem Kammteil (31c) aus nach unten erstreckt, bevor sie sich weiter nach hinten, entlang der Oberfläche des Vorderrades (3), erstreckt.

3. Vorderes Schutzblech (30) nach Anspruch 1 oder 2, wobei der Übergangsteil (31a) eine abfallende Fläche (31b) vor dem Kammteil (31c) hat, die sich zu dem Kammteil (31c) hin nach oben neigt.

4. Vorderes Schutzblech (30) nach Anspruch 3, wobei sich die obere Fläche (31) des vorderen Schutzblechs (30) von einem hinteren Ende (31f) des vorderen Schutzblechs (30) aus nach hinten erstreckt und bis zu der abfallenden Fläche (31b) fortsetzt.

5. Vorderes Schutzblech (30) nach einem der vorhergehenden Ansprüche, wobei der Übergangsteil (31a) so geformt ist, dass er sich von der Mitte aus zu einem Paar aus einem linken und einem rechten vorderen Aufhängungselement (5) hin erstreckt.

6. Vorderes Schutzblech (30) nach einem der vorhergehenden Ansprüche, wobei sich der Kammteil (31c) von der Mitte aus zu den Seiten allmählich nach oben neigt.

7. Vorderes Schutzblech (30) nach Anspruch 6, wobei
Enden (31h) des Kammteils dafür eingerichtet sind, oberhalb eines oberen Endes (5c) eines äußeren Rohres (5a) eines unteren Teils jedes vorderen Aufhängungselements (5) angeordnet zu sein.

8. Vorderes Schutzblech (30) nach einem der vorhergehenden Ansprüche,
wobei das vordere Schutzblech (30) dafür eingerichtet ist, sich entlang des Vorderrades (3) zu krümmen, und
die Mitte (31c) des Übergangsteils (3 1 a) dafür eingerichtet ist, vor einer höchsten Position (3p) des Vorderrades (3) angeordnet zu werden.

9. Vorderes Schutzblech (30) nach einem der vorhergehenden Ansprüche, das ferner Folgendes umfasst: ein Paar aus einem linken und einem rechten Seitenflächenteil (32), die nach unten hängen und sich von einer vorderen Seite des vorderen Schutzblechs zu den Aufhängungselementen (5) hin erstrecken.

10. Vorderes Schutzblech (30) nach einem der vorhergehenden Ansprüche, wobei sich ein mittiger Kamm (31g) von einem vorderen Ende (31f) des vorderen Schutzblechs (30) aus nach hinten erstreckt und an der oberen Fläche (31) des vorderen Schutzblechs (30) geformt ist.

11. Vorderes Schutzblech (30) nach Anspruch 10,
wobei der Übergangsteil (31a) dafür eingerichtet ist, sich von der Mitte des vorderen Schutzblechs (30) aus zu einem Paar von Aufhängungselementen (5) hin zu erstrecken, und
sich der mittige Kamm (31g) von dem vorderen Ende (31f) des vorderen Schutzblechs (30) aus nach hinten bis zu der Mitte (31e) des Übergangsteils (31a) erstreckt.

12. Motorrad (1), welches das vordere Schutzblech (30) nach einem der vorhergehenden Ansprüche, umfasst.

13. Motorrad (1) nach Anspruch 12, das Folgendes umfasst: einen luftgekühlten Motor (60), der hinter dem vorderen Schutzblech angeordnet ist.

14. Motorrad nach Anspruch 12, das ferner Folgendes umfasst: einen Kühler, in dem ein Kühlmittel zum Kühlen eines Motors strömt, angeordnet hinter dem vorderen Schutzblech (30), um das Kühlmittel durch einen Luftstrom zu kühlen.

## Revendications

1. Garde-boue (30) avant pour motocyclette (1), le garde-boue (30) comprenant une surface supérieure (31) destinée à s'étendre vers l'arrière le long et au-dessus d'une roue avant (3) et entre une paire d'éléments de suspension (5) supportant la roue avant (3), le garde-boue (30) comprenant une partie de transition (31a) destinée à être située en avant des éléments de suspension (5), la partie de transition (31a) étant formée sur une surface supérieure (31) du garde-boue (30) pour diriger un flux d'air s'écoulant le long de la surface supérieure (31) du garde-boue (30) avant loin de la surface supérieure (31); dans lequel
la partie de transition (31a) est formée sur la surface supérieure (31) du garde-boue (30) avant pour s'étendre du centre du garde-boue (30) avant vers les côtés gauche et droit et le centre (31e) de la partie de transition (31a) est situé devant des parties d'extrémité (31h) de la partie de transition, de telle sorte que la partie de transition a la forme d'un V ouvert en direction de l'arrière lorsque le garde-boue avant est vu en vue plane.

2. Garde-boue (30) avant selon la revendication 1,
dans lequel la partie de transition (31a) inclut une partie formant arête (31c) et
la partie supérieure (31) du garde-boue (30) avant s'étend vers le bas depuis la partie formant arête (31c) avant de s'étendre plus loin vers l'arrière, le long de la surface de la roue avant (3).

3. Garde-boue (30) avant selon la revendication 1 ou 2, dans lequel la partie de transition (31a) présente une partie en pente (31b), devant la partie formant arête (31c), s'inclinant vers le haut vers la partie formant arête (31c).

4. Garde-boue (30) avant selon la revendication 3, dans lequel la surface supérieure (31) du garde-boue (30) avant s'étend vers l'arrière depuis une extrémité antérieure (31f) du garde-boue (30) avant et se poursuit vers la surface en pente (31b).

5. Garde-boue (30) avant selon l'une quelconque des revendications précédentes, dans lequel la partie de transition (31a) est formée pour s'étendre du centre vers une paire d'éléments de suspension antérieurs gauche et droit (5).

6. Garde-boue (30) avant selon l'une quelconque des revendications précédentes, dans lequel la partie formant arête (31c) s'incline progressivement vers le haut du centre vers les côtés.

7. Garde-boue (30) avant selon la revendication 6; dans lequel
les extrémités (31h) de la partie formant arête sont adaptées pour être situées en dessus d'une extrémité supérieure (5c) d'un tube extérieur (5a) d'une partie inférieure de chaque élément de suspension antérieur (5).

8. Garde-boue (30) avant selon l'une quelconque des revendications précédentes,
dans lequel le garde-boue (30) avant est adapté pour s'incurver le long de la roue avant (3) et
le centre (31c) de la partie de transition (31a) est adapté pour être situé devant une position la plus haute (3p) de la roue avant (3).

9. Garde-boue (30) avant selon l'une quelconque des revendications précédentes, comprenant, en outre: une paire de parties de surface latérales gauche et droite (32) tombant vers le bas et destinées à s'étendre vers les éléments de suspension (5) depuis un côté antérieur du garde-boue avant.

10. Garde-boue (30) avant selon l'une quelconque des revendications précédentes, dans lequel une arête centrale (31g) s'étend vers l'arrière depuis une extrémité antérieure (31f) du garde-boue (30) et est formée sur la surface supérieure (31) du garde-boue (30) avant.

11. Garde-boue (30) avant selon la revendication 10,
dans lequel la partie de transition (31a) est adaptée pour s'étendre du centre du garde-boue (30) avant vers une paire d'éléments de suspension (5) et
l'arête centrale (31g) s'étend vers l'arrière de l'extrémité antérieure (31f) du garde-boue (30) avant jusqu'au centre (31e) de la partie de transition (31a).

12. Motocyclette (1) comprenant le garde-boue (30) avant selon l'une quelconque des revendications précédentes.

13. Motocyclette (1) selon la revendication 12, comprenant: un moteur refroidi par air (60) disposé à l'arrière du garde-boue avant.

14. Motocyclette selon la revendication 12, comprenant, en outre: un radiateur, dans lequel un fluide de refroidissement pour refroidir un moteur s'écoule, disposé à l'arrière du garde-boue (30) avant pour refroidir le fluide de refroidissement par un écoulement d'air.
